Europäisches Patentamt

European Patent Office

Office européen des brevets

(19)

(11) Veröffentlichungsnummer: **0 095 549**
**B1**

(12) **EUROPÄISCHE PATENTSCHRIFT**

(45) Veröffentlichungstag der Patentschrift:
02.10.85

(51) Int. Cl.⁴: **G 01 N 21/74**

(21) Anmeldenummer: 83100519.4

(22) Anmeldetag: 21.01.83

(54) Vorrichtung zum Atomisieren einer Probe bei der flammenlosen Atomabsorptions-Spektroskopie.

(30) Priorität: 08.05.82 DE 3217417

(43) Veröffentlichungstag der Anmeldung:
07.12.83 Patentblatt 83/49

(45) Bekanntmachung des Hinweises auf die Patenterteilung:
02.10.85 Patentblatt 85/40

(84) Benannte Vertragsstaaten:
DE FR GB IT

(56) Entgegenhaltungen:
EP - A - 0 053 349
DE - A - 3 009 794
DE - B - 2 008 295
DE - B - 2 023 336
DE - B - 2 710 861
DE - B - 2 718 416

(73) Patentinhaber: Bodenseewerk Perkin-Elmer & Co. GmbH, Alte Nussdorfer Strasse 15 Postfach 1120, D-7770 Überlingen/Bodensee (DE)

(72) Erfinder: Tamm, Rolf, Am Fohrenbühl 8, D-7777 Salem 2 (DE)
Erfinder: Tomoff, Toma, Lawendelweg 9, D-7770 Überlingen (DE)

(74) Vertreter: Weisse, Jürgen, Dipl.-Phys. et al, Bökenbusch 41 Postfach 11 03 86, D-5620 Velbert 11-Langenberg (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Vorrichtung zum Atomisieren einer Probe bei der flammenlosen Atomabsorptions-Spektroskopie enthaltend

(a) ein Graphitrohr, das zwischen einem Paar von ringförmigen Elektroden gehalten wird,

(b) einen Netzteil, durch den nach einem vorgegebenen Programm ein Strom über die Elektroden durch das Graphitrohr zum Aufheizen des Graphitrohrs erzeugbar ist,

(c1) einen vor dem Graphitrohr angeordneten, durch eine Führung beweglich geführten, den Durchtritt eines Meßlichtbündels durch das Graphitrohr gestattenden Schlitten,

(d1) einen an dem Schlitten angebrachten, bei Bewegung des Schlittens in das Graphitrohr hinein verfahrbaren Probenträger,

(e) gesteuerte Antriebsmittel zum Verfahren des Schlittens in verschiedene Positionen und

(f1) Einrichtungen zum Durchleiten von Heizstrom durch den Probenträger in jeder Stellung des Schlittens.

Eine solche Vorrichtung ist Gegenstand der DE-A-3 009 794. Hierbei wird der Probenträger durch Bewegung des Schlittens senkrecht zur Graphitrohrachse in eine radiale Öffnung des Graphitrohrs bewegt. Die EP-A1-0 053 349, veröffentlicht am 9. 6. 1982, beschreibt ein Verfahren und eine Vorrichtung zum Einbringen einer Probe in ein Graphitrohr bei der flammenlosen Atomabsorptions-Spektroskopie, bei welchem zum Einbringen der Probe in das Graphitrohr ein plättchen- oder tiegelförmiger Probenträger von der Stirnseite her in Axialrichtung in das Graphitrohr eingeführt wird. Eine Trocknung und Veraschung der Probe erfolgt außerhalb des Graphitrohrs. Der Probenträger kann indirekt durch Strahlung oder direkt durch Hindurchleiten von elektrischem Strom beheizt werden. Es werden verschiedene Formen von Probenträgern angegeben.

Der Erfindung liegt die Aufgabe zugrunde, eine Vorrichtung der eingangs definierten Art so auszubilden, daß in jeder Stellung des Probenträgers eine Beheizung durch elektrischen Strom möglich ist.

Erfindungsgemäß wird diese Aufgabe dadurch gelöst, daß

(c2) der Schlitten vor der Stirnfläche des Graphitrohrs angeordnet ist und durch die Führung in Längsrichtung des Graphitrohrs beweglich geführt ist,

(d2) daß der Probenträger sich unterhalb des Meßlichtbündels in Längsrichtung des Graphitrohrs erstreckt und daß

(f2) die Führung des Schlittens Stromschienen aufweist, an denen Schleifkontakte des Schlittens anliegen, welche ihrerseits mit Anschlüssen des elektrisch leitenden Probenträgers elektrisch verbunden sind.

Ausgestaltungen der Erfindung sind Gegenstand der abhängigen Ansprüche.

Ein Ausführungsbeispiel der Erfindung ist nachstehend unter Bezugnahme auf die zugehörigen Zeichnungen näher erläutert:

Fig. 1 zeigt schematisch den Gesamtaufbau einer Vorrichtung zum Atomisieren einer Probe bei der flammenlosen Atomabsorptions-Spektroskopie.

Fig. 2 veranschaulicht die Temperaturmessung bei der Vorrichtung nach Fig. 1.

Fig. 3 zeigt einen abgebrochen dargestellten Querschnitt durch die Vorrichtung.

Fig. 4 zeigt einen abgebrochen dargestellten Längsschnitt der Vorrichtung.

Fig. 5 zeigt eine Ausführung eines elektrisch beheizbaren Probenträgers.

Fig. 6 zeigt in vergrößertem Maßstab die Elektroden, zwischen denen das Graphitrohr gehaltert ist.

Fig. 7 veranschaulicht ein mit der Vorrichtung von Fig. 1 bis 6 durchführbares Programm.

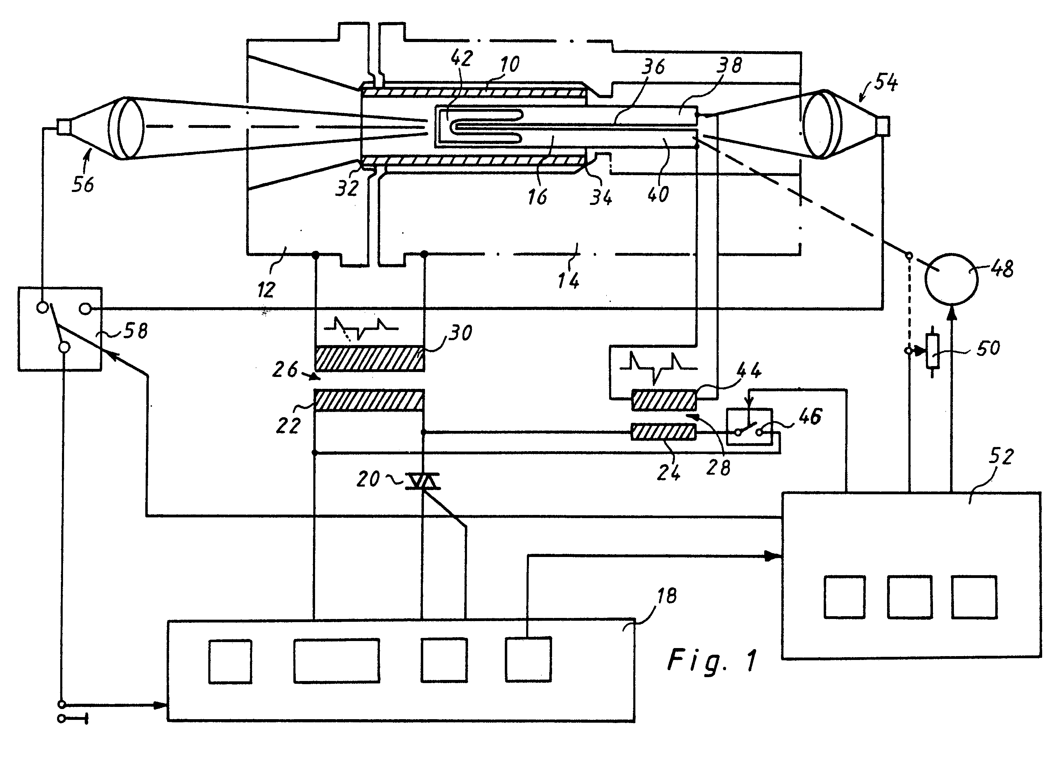

Wie aus Fig. 1 ersichtlich ist, ist ein Graphitrohr 10 zwischen Graphitelektroden 12 und 14 gehaltert, wobei die Graphitelektrode 14 sich um das Graphitrohr 10 herum über annähernd die gesamte Länge desselben erstreckt. Die Graphitelektroden 12 und 14 sind ringförmig mit einem zentralen Durchbruch, so daß ein Meßlichtbündel eines Atomabsorptions-Spektralphotometers durch die Graphitelektroden und durch das Graphitrohr 10 in Längsrichtung hindurchlaufen kann. Ein plättchenförmiger Probenträger 16 ist in noch zu beschreibender Weise unterhalb des Meßlichtbündels in Längsrichtung des Graphitrohres 10 beweglich, so daß er von der Stirnseite her in das Graphitrohr 10 eingeführt werden kann, wie in Fig. 1 dargestellt ist, oder aber aus dem Graphitrohr herausziehbar ist. Ein Netzteil enthält eine Programmsteuerung 18 für die Temperatur. Die Programmsteuerung steuert über einen Triac 20 den Strom durch die parallelgeschalteten Primärwicklungen 22 und 24 eines Graphitrohr-Transformators 26 und eines Probenträger-Transformators 28. Die Enden der Sekundärwicklung 30 des Graphitrohr-Transformators 26 sind mit den beiden Elektroden 12 und 14 verbunden. Der Graphitrohr-Transformator 26 erzeugt daher einen Heizstrom über die Elektrode 12, die linke Kontaktfläche 32 zwischen der Elektrode 12 und dem Graphitrohr 10, das Graphitrohr 10, die rechte Kontaktfläche 34 zwischen dem Graphitrohr 10 und schließlich die Elektrode 14. Der Probenträger 16 weist einen Schlitz 36 auf, der von einem Ende sich längs der Mittellinie bis fast zu dem anderen Ende erstreckt, so daß eine U-förmige Grundform mit zwei Schenkeln 38 und 40 entsteht. In dem Bogen des »U« ist eine U-förmige Vertiefung 42 zur Aufnahme der Probe gebildet. Die beiden Schenkel 38 und 40 sind in noch zu beschreibender Weise mit den Enden der Sekundärwicklung 44 des Probenträger-Transformators 28 verbunden. Mit der Primärwicklung 24 des Probenträger-Transformators 28 ist ein Schalter 46 in Reihe geschaltet.

Der Probenträger 16 ist durch einen Stellmotor 48 in noch zu beschreibender Weise in Längsrichtung verstellbar. Die Stellung des Probenträgers 16 wird durch einen Stellungsgeber in Form eines Potentiometers 50 abgegriffen. Das Potentiometer 50 liefert ein Stellungssignal auf eine Probenträger-Steuerung 52.

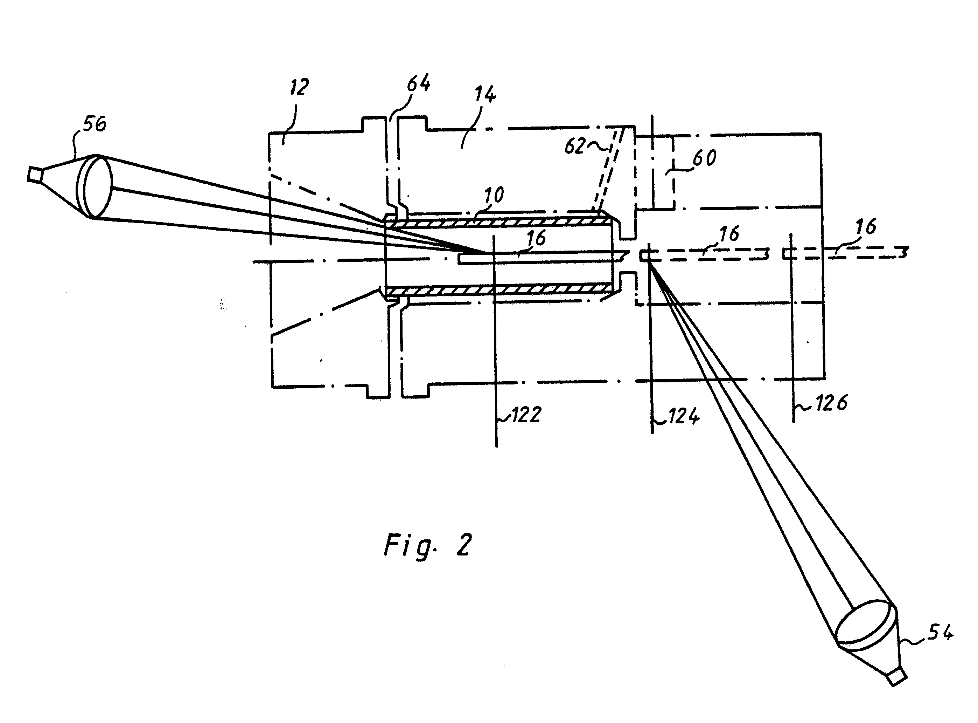

Die Temperatur des Probenträgers wird durch zwei Sensoren 54 und 56 pyrometrisch überwacht. Ein erster pyrometrischer Sensor 54 ist auf den Probenträger 16 in dessen Stellung außerhalb des Graphitrohres 10 gerichtet. Wie aus Fig. 2 ersichtlich ist, ist der erste pyrometrische Sensor 54 schräg gegen die Unterseite des Probenträgers 16 gerichtet. Ein zweiter pyrometrischer Sensor 56 ist seitlich von dem Meßlichtbündel angeordnet und von der in Fig. 2 linken Stirnseite des Graphitrohres 10 her schräg in das Innere des Graphitrohres 10 gerichtet. Die Temperatursignale der Sensoren 54 und 56 sind als Istwertsignale einer Temperaturprogrammregelung auf den Programmgeber 18 des Netzteils aufschaltbar. Durch einen Sensorumschalter 58, der von der Probenträger-Steuerung 52 gesteuert wird, ist wahlweise der erste oder der zweite Sensor 54 oder 56 zu diesem Zweck mit dem Netzteil verbindbar.

Wie aus Fig. 2 ersichtlich ist, strömt ein interner Gasstrom durch den Durchbruch der Elektrode 12 hindurch und durch das Innere des Graphitrohrs 10 zu einem in der Elektrode 14 gebildeten Dosierfenster 60. Ein äußerer Gasstrom fließt durch eine Bohrung 62 der Elektrode 14 zu dem Ringraum zwischen Graphitrohr 10 und Elektrode 14 und durch diesen Ringraum zu einem Spalt 64 zwischen den Elektroden 12 und 14, wo der externe Gasstrom in die Atmosphäre abfließt. Ein weiterer externer Gasstrom tritt in die Bohrung der Elektrode 14 von rechts in Fig. 2 ein und umspült den Probenträger 16, wenn dieser aus dem Graphitrohr 10 herausgezogen ist.

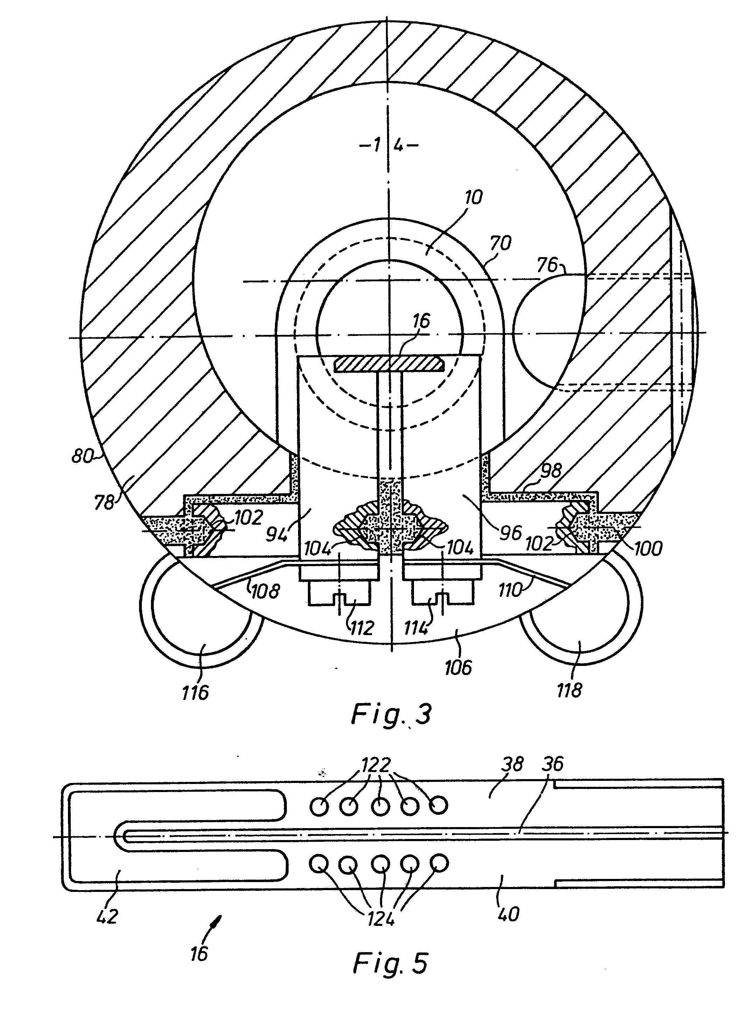

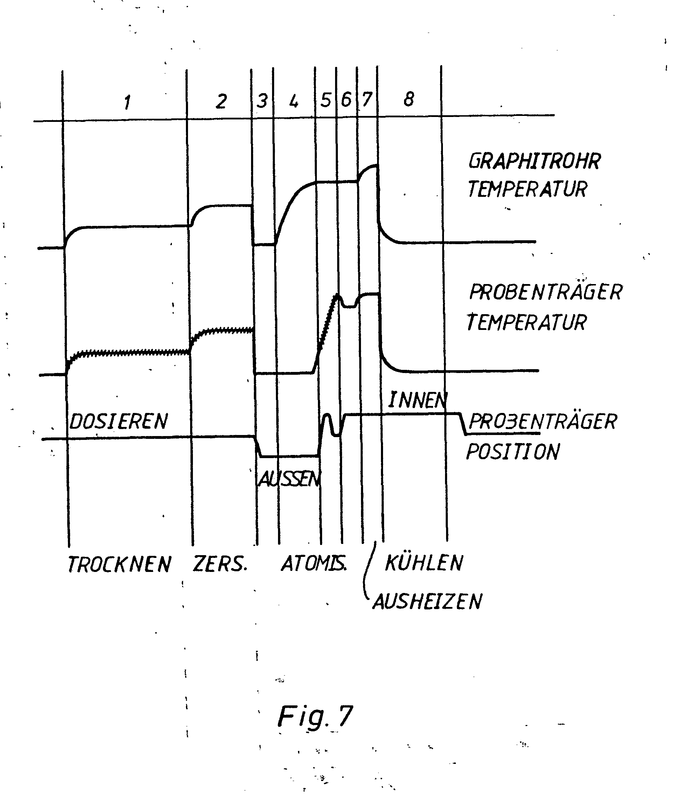

Wie aus Fig. 3, 4 und 6 ersichtlich ist, weist die Elektrode 16 einen Hauptteil 66 auf, der die Kontaktfläche 34 bildet und sich mantelförmig um das Graphitrohr 10 erstreckt. An den Hauptteil 66 schließt sich ein Ansatz 68 an. Der Ansatz 68 weist eine torförmige, tunnelartige Ausnehmung 70 auf, die am besten aus Fig. 3 erkennbar ist. Die Dosieröffnung 60 mündet in der tunnelartigen Ausnehmung 70. Mit der Dosieröffnung 60 fluchtet eine Öffung 72 in einem Gehäuse 74, das die Elektrode 66 umgibt. Um 90° versetzt gegen die tunnelartige Ausnehmung 70 ist in dem Ansatz 68 eine weitere tunnelartige Ausnehmung 76 gebildet. Der Probenträger 16 sitzt an einem ringförmigen Schlitten 78, der in einer zu dem Graphitrohr 10 gleichachsigen Bohrung 80 des Gehäuses 74 verschiebbar geführt ist. An dem Schlitten 78 sitzt seitlich eine Zahnleiste 82, die sich in einer über die Vorderkante des Schlittens 78 vorstehenden Zahnstange 82A fortsetzt. Die Zahnleiste 82 ist mit einem Ritzel 84 in Eingriff, das von einem Motor 48 über eine Welle 88 angetrieben wird. Auf der Welle 88 sitzt ein Zahnrad 90, das mit einem Zahnrad 92 in Eingriff ist. Das Zahnrad 92 treibt das als Stellungsgeber dienende Potentiometer 50 (Fig. 1).

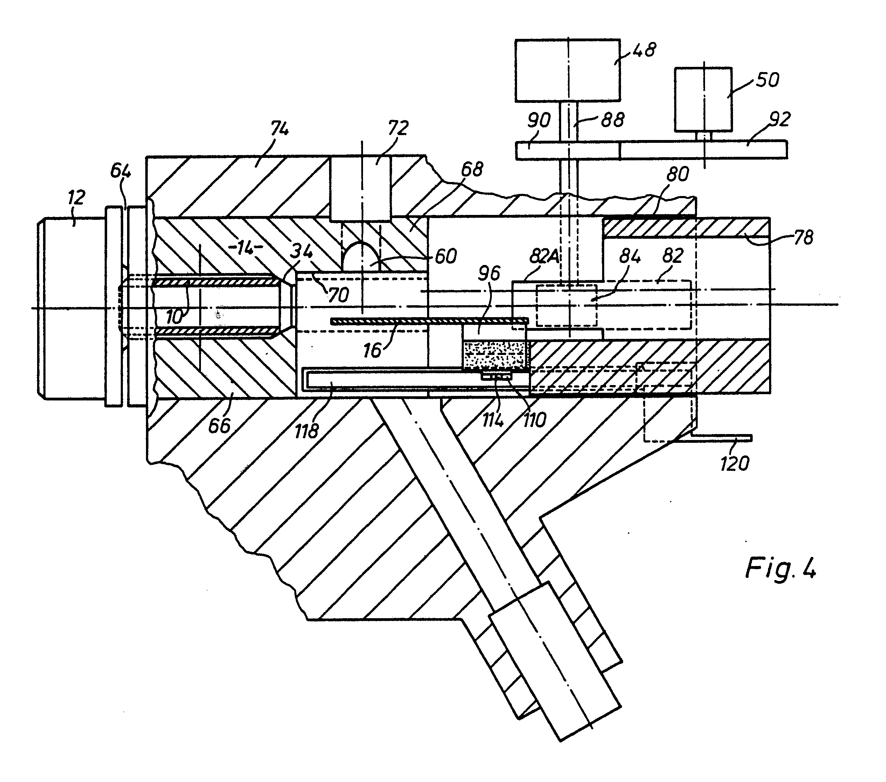

Der Probenträger 16 ist zwischen einem Paar von Graphitkontakten 94, 96 gehalten, die an dem vorderen Ende des Schlittens 78 angebracht sind. Der Schlitten weist zu diesem Zweck an seiner in Fig. 4 linken Stirnseite einen Ausschnitt 98 auf, in den die Graphitkontakte 94 und 96 eingesetzt sind und in welchem diese mittels einer isolierenden Masse 100 fest eingegossen sind. Bohrungen 102 und 104, in welche die Vergußmasse eindringt, gewährleisten eine sichere Verankerung. Unterhalb der Graphitkontakte 94 und 96 ist ein freier Raum 106 gebildet. Unten an die Graphitkontakte 94 und 96 sind Kontaktfedern 108 und 110 mittels Schrauben 112 bzw. 114 befestigt.

Längs der Bohrung 80 erstrecken sich zwei Stromschienen 116 und 118, die mit Anschlußklemmen 120 verbunden sind.

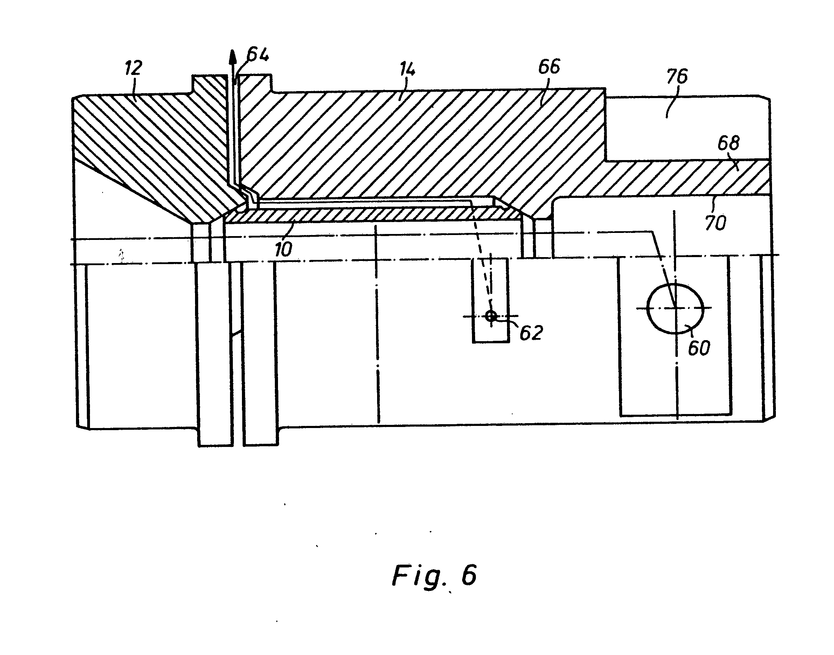

Der Probenträger 16 ist in Fig. 5 vergrößert dargestellt. Die Schenkel 38 und 40 weisen jeder eine Reihe von Bohrungen 122, 124 auf, welche die Wärmeableitung vermindern sollen. Die Anschlußklemmen 120 sind mit den Enden der Sekundärwicklung 44 des Probenträger-Transformators 28 verbunden. Es kann in jeder Stellung des Schlittens 78 und Probenträgers 16 ein Strom über die Stromschiene 116, den Schleifkontakt 108, den Graphitkontakt 94, den Schenkel 40 des Probenträgers 16, den Schenkel 38 des Probenträgers 16, den Graphitkontakt 96, den Schleifkontakt 110 und die Stromschiene 118 geleitet werden. Es ist daher in jeder Stellung des Schlittens 78 eine direkte elektrische Beheizung des Probenträgers 16 möglich.

Wie in Fig. 2 dargestellt ist, kann der Probenträger 16 wahlweise in eine von drei Stellungen 122, 124 und 126 verfahren werden. Die Position 122 ist die »innere Position«, in welcher sich die Vertiefung 42 des Probenträgers 16 in der Mitte des Graphitrohrs 10 befindet. In der in Fig. 2 gestrichelt dargestellten Position 124, der »Dosier-Position« befindet sich die Vertiefung 42 unterhalb der Dosieröffnung 60. Bei dieser Stellung des Probenträgers 16 kann Probe durch die Dosieröffnung 60 hindurch aufgegeben werden. Das Aufgeben kann mittels einer Vorrichtung geschehen, wie sie beispielsweise in Fig. 3 der DE-A-2 507 260 dargestellt ist. In der »äußeren Position« 126 ist der Probenträger so weit von dem Graphitrohr 10 entfernt, daß seine Temperatur nur unwesentlich von der Temperatur des Graphitrohrs beeinflußt wird.

Der Programmgeber 18 enthält Tasten, mittels derer ein Programm vorgegeben werden kann. Mit dem jeweiligen Programmschritt des Programmgebers 18 wird auch die Probenträger-Steuerung 52 angesteuert und der Probenträger entsprechend in die innere, die Dosier- oder die äußere Position verfahren.

Fig. 7 zeigt ein typisches Programm, wie es mit einer Vorrichtung der beschriebenen Art durchgeführt wird. Im Programmschnitt »1« ist der Probenträger 16 in der Dosier-Position 124. Das Graphitrohr ist vorgeheizt. Gleichzeitig wird auch der Probenträger aktiv beheizt, was durch die Querstrichelung der Kurve »Probenträger-Temperatur« angedeutet ist. Es erfolgt bei diesem Programmschritt eine Trocknung der durch die Dosieröffnung 60 eingegebenen Probe. Verdunstendes Lösungsmittel wird durch den internen Gasstrom, wie in Fig. 2 angedeutet, abgeführt. In der gleichen Stellung des Probenträgers 16 erfolgt anschließend die thermische Zersetzung (Veraschung) der Probe. Zu diesem Zweck wird die Temperatur sowohl des Graphitrohrs 10 als auch des Probenträgers weiter erhöht. Der Probenträger bleibt in der Dosier-Position 124. Bei der Veraschung auftretender Rauch wird ebenfalls durch den internen Gasstrom über die Dosieröffnung 60 abgeleitet. Trocknung und Veraschung erfolgen somit durch aktive Beheizung des Probenträgers außerhalb des Graphitrohres. Der interne Gasstrom verhindert ein Eintreten von dabei auftretenden Dämpfen oder Zersetzungsprodukten in das Graphitrohr. Im dritten Verfahrensschritt wird die Temperatur des Graphitrohrs wie die des Probenträgers 16 abgesenkt. Der Probenträger 16 wird in seine äußere Position 126 (Fig. 2) verfahren. Im nächsten, dem vierten Schritt wird das Graphitrohr 10 auf Atomisierungstemperatur aufgeheizt. Der Probenträger bleibt dabei zunächst im Abstand von dem Graphitrohr 10, so daß seine Temperatur von der Graphitrohrtemperatur noch nicht beeinflußt wird. Im fünften Verfahrensschritt wird der Probenträger aus der Position 126 in die Position 122 vorbewegt. Gleichzeitig wird der Probenträger, wie durch die Querstrichelung der Probenträger-Temperaturkurve angedeutet ist, aktiv beheizt. Hierdurch erfolgt ein schneller Temperaturanstieg des Probenträgers 16, da der beheizte Probenträger 16 in das auf Atomisierungstemperatur vorgeheizte Graphitrohr 10 hineingefahren wird. Es tritt dadurch ein schmaler, hoher Peak durch Absorption des Meßlichtbündels in der gebildeten »Atomwolke« auf. Der Probenträger wird dann kurzzeitig in die Dosier-Position 124 zurückbewegt und anschließend wieder in das Graphitrohr vorbewegt, wobei die Beheizung des Probenträgers 16 abgeschaltet wird. Während des sechsten Schritts bleibt somit das Graphitrohr auf seiner Atomisierungstemperatur. Die Temperatur des Probenträgers 16 sinkt gegenüber dem Maximum geringfügig ab. Im nächsten, siebenten Schritt erfolgt ein Ausheizen des Graphitrohres. Die Graphitrohrtemperatur wird kurzzeitig noch weiter erhöht. Damit steigt auch die Temperatur des Probenträgers. Hierdurch werden Reste der Probe verdampft, die auf dem Probenträger verblieben sein könnten oder sich an dem Graphitrohr 10 niedergeschlagen haben. Der achte Schritt besteht in einem Abkühlen des Graphitrohrs. Die Graphitrohrtemperatur und die Temperatur des Probenträgers sinkt ab, nachdem die Heizung abgeschaltet ist. Anschließend wird der Probenträger wieder in die Dosier-Position 124 zurückbewegt.

Während der Phasen, wo zwar das Graphitrohr beheizt wird, nicht jedoch der Probenträger, beispielsweise während des Schritts 4, ist der Schalter 46 geöffnet. Wenn das Graphitrohr 10 beheizt wird und diese Beheizung keinen Einfluß auf den Probenträger ausüben soll, wie das ebenfalls bei Schritt 4 der Fall ist, wird der Probenträger in die äußere Position 126 zurückgefahren.

In der Dosier-Position 124 wird die Temperatur des Probengebers 16 durch den Sensor 54 gemessen, der einen Istwert für eine Temperaturregelung liefert. Der Sensor 56 liefert, wenn sich der Probenträger 16 an der inneren Position 122 befindet, im wesentlichen einen Istwert für die Temperatur des Probenträgers 16. Sonst bestimmt der Sensor 56 die Temperatur des Graphitrohrs.

**Patentansprüche**

1. Vorrichtung zum Atomisieren einer Probe bei der flammenlosen Atomabsorptions-Spektroskopie, enthaltend

(a) ein Graphitrohr (10), das zwischen einem Paar von ringförmigen Elektroden (12, 14) gehalten wird,

(b) einen Netzteil (18, 26), durch den nach einem vorgegebenen Programm ein Strom über die Elektroden (12, 14) durch das Graphitrohr (10) zum Aufheizen des Graphitrohrs (10) erzeugbar ist,

(c1) einen vor dem Graphitrohr (10) angeordneten, durch eine Führung (80) beweglich geführten, den Durchtritt eines Meßlichtbündels durch das Graphitrohr gestattenden Schlitten (78),

(d1) einen an dem Schlitten (78) angebrachten, bei Bewegung des Schlittens (78) in das Graphitrohr (10) hinein verfahrbaren Probenträger (16),

(e) gesteuerte Antriebsmittel (48) zum Verfahren des Schlittens (78) in verschiedene Positionen und

(f1) Einrichtungen zum Durchleiten von Heizstrom durch den Probenträger (16) in jeder Stellung des Schlittens (78),

dadurch gekennzeichnet, daß

(c2) der Schlitten (78) vor der Stirnfläche des Graphitrohrs (10) angeordnet ist und durch die Führung (80) in Längsrichtung des Graphitrohrs (10) beweglich geführt ist,

(d2) daß der Probenträger (16) sich unterhalb des Meßlichtbündels in Längsrichtung des Graphitrohrs erstreckt und daß

(f2) die Führung des Schlittens (78) Stromschienen (116, 118) aufweist, an denen Schleifkontakte (108, 110) des Schlittens (78) anliegen, welche ihrerseits mit Anschlüssen des elektrisch leitenden Probenträgers (16) elektrisch verbunden sind.

2. Vorrichtung nach Anspruch 1, dadurch gekennzeichnet, daß

(a) ein erster pyrometrischer Sensor (54) vorgesehen ist, der auf den Probenträger (16) in dessen Stellung außerhalb des Graphitrohres gerichtet ist, und
(b) ein zweiter pyrometrischer Sensor (56), der seitlich von dem Meßlichtbündel angeordnet und von der dem Schlitten (78) abgewandten Stirnseite her schräg in das Innere des Graphitrohres (10) gerichtet ist.

3. Vorrichtung nach Anspruch 2, dadurch gekennzeichnet, daß

(a) die Temperatursignale der Sensoren (54, 56) als Istwertsignale einer Temperaturprogrammregelung auf den Netzteil (18, 26) aufschaltbar sind und
(b) durch einen Sensorumschalter (58) wahlweise der erste oder der zweite Sensor (54, 56) zu diesem Zweck mit dem Netzteil (18, 26) verbindbar ist.

4. Vorrichtung nach Anspruch 2 oder 3, dadurch gekennzeichnet, daß der erste pyrometrische Sensor (54) schräg gegen die Unterseite des Probenträgers (16) gerichtet ist.
5. Vorrichtung nach einem der Ansprüche 1 bis 4, dadurch gekennzeichnet, daß

(a) der Netzteil einen ersten Transformator (26) enthält, dessen Sekundärwicklung (30) mit den ringförmigen Elektroden (12, 14) verbunden ist, so daß über diesen ersten Transformator (26) ein Heizstrom durch das Graphitrohr (10) erzeugbar ist,
(b) daß der Netzteil einen zweiten Transformator (28) enthält, dessen Sekundärwicklung (44) mit den Stromschienen (116, 118) verbunden ist, so daß über diesen zweiten Transformator (28) ein Heizstrom durch den Probenträger (16) erzeugbar ist, und daß
(c) die Primärwicklungen (22, 24) der beiden Transformatoren (26, 28) parallel geschaltet sind.

6. Vorrichtung nach Anspruch 5, dadurch gekennzeichnet, daß mit der Primärwicklung (24) des zweiten Transformators (28) ein Schalter (46) in Reihe liegt.

**Claims**

1. Device for atomizing a sample in the flameless atomic absorption spectroscopy, comprising

(a) a graphite tube (10) held between a pair of annular electrodes (12, 14),

(b) a power-supply (18, 26) adapted to generate, in accordance with a predetermined program, a current through the electrodes (12, 14) through the graphite tube (10) for heating the graphite tube (10),
(c₁) a carriage (78) arranged in front of the graphite tube (10) and movably guided by a guiding device (80), the carriage permitting a measuring light beam to pass through the graphite tube,
(d₁) a sample carrier (16) mounted on the carriage (78) and adapted to be inserted into the graphite tube when the carriage (78) is moved,
(e) controlled driving means (48) for moving the carriage (78) into different positions, and
(f₁) devices for passing a heating current through the sample carrier (16) in each position of the carriage (78),

characterized in that

(c₂) the carriage (78) is arranged in front of the end face of the graphite tube and movably guided by the guiding device (80) longitudinally of the graphite tube (10),
(d₂) the sample carrier (16) extends below the measuring light beam longitudinally of the graphite tube, and
(f₂) the guiding device of the carriage (78) has current-carrying rails (116, 118) engaging sliding contacts (108, 110) of the carriage (78) which are electrically connected to terminals of the electrically conducting sample carrier (16).

2. Device as set forth in claim 1, characterized in that

(a) a first pyrometric sensor (54) is provided, which is directed to the sample carrier (16) in its position outside the graphite tube, and
(b) a second pyrometric sensor (56) arranged laterally of the measuring light beam and directed from the end face remote from the carriage (78) diagonally into the interior of the graphite tube (10).

3. Device as set forth in claim 2, characterized in that

(a) the temperature signals of the sensors (54, 56) are applied, as desired value signals of a temperature program control, to a power-supply (18, 26), and
(b) to this end the first or the second sensor (54, 56) are optionally connected to the power-supply (18, 26) by a sensor switch (58).

4. Device as set forth in claim 2 or 3, characterized in that the first pyrometric sensor (54) is directed diagonally to the lower surface of the sample carrier (16).
5. Device as set forth in anyone of the claims 1 to 4, characterized in that

(a) the power-supply comprises a first transformer (26) the secondary winding (30) of which is connected to the annular electrodes (12, 14) such that this first transformer (26) is arranged to generate a heating current through the graphite tube (10),

(b) the power-supply comprises a second transformer (28) the secondary winding (44) of which is connected to the current-carrying rails (116, 118) such that this second transformer (28) is arranged to generate a heating current through the sample carrier (16), and

(c) the primary windings (22, 24) of the two transformers (26, 28) are connected in parallel.

6. Device as set forth in claim 5, characterized in that a switch (46) is arranged in series with the primary winding (24) of the second transformer (28).

**Revendications**

1. Dispositif appelé à atomizer un échanillon en cas de spectroscopie par absorption atomique sans flamme, comprenant

(a) un tube de graphite (10) tenu entre une paire d'électrodes annulaires (12, 14),

(b) un bloc d'alimentation électrique (18, 26) qui peut engendrer, selon un programme prédeterminé, un courant par les électrodes (12, 14) à travers le tube de graphite (10), afin de chauffer le tube de graphite,

(c₁) un chariot (78) disposé devant le tube de graphite (10) et guidé de manière mobile par un guide (80), ce chariot (78) permettant à un faisceau lumineux de mesure à passer à travers le tube de graphite,

(d₁) un support d'échantillon (16) monté sur le chariot (78) et qui, au cas de mouvement du chariot (78), peut être introduit dans le tube de graphite (10),

(e) un moteur de commande contrôlé (48) déstiné à déplacer le chariot (78) vers des positions différentes, et

(f₁) des dispositifs déstinés à passer un courant de chauffage à travers le support d'échantillon (16), dans chaque position du chariot (78),

caractérisé par le fait que

(c₂) le chariot (78) est disposé devant le front du tub de graphite et guidé par le guide (80) de sorte à permettre un mouvement longitudinale du tube de graphite (10),

(d₂) le support d'échantillon (16) s'étend au-dessous du faisceau lumineux de mesure en direction longitudinale du tube de graphite, et

(f₂) le guide du chariot (78) présente des barres conductrices (116, 118) appliquées sur des contacts glissants (108, 110) du chariot (78) qui sont électriquement reliés à des raccords du support d'échantillon (16) conduisant de l'électricité.

2. Dispositif selon la revendication 1, caractérisé par le fait que

(a) un premier détecteur pyrométrique (54) est prévu, qui est dirigé vers le support d'échantillon (16) dans sa position en dehors du tube de graphite, et

(b) un deuxième détecteur pyrométrique (56) est prévu, qui est disposé latéralement au faisceau lumineux de mesure et qui est dirigé, depuis le front opposé au chariot (78), diagonalement dans l'intérieur du tube de graphite (10).

3. Dispositif selon la revendication 2, caractérisé par le fait que

(a) les signaux de température des détecteurs (54, 56) peuvent être appliqués, comme signaux à valeur désirée d'un réglage de programme de température, au bloc d'alimentation électrique (18, 26), et

(b) à cette fin, le premier ou le deuxième capteur (54, 56) peut être relié alternativement au bloc d'alimentation électrique (18, 26), grâce à un commutateur de détecteur (58).

4. Dispositif selon la revendications 2 ou 3, caractérisé par le fait que le premier détecteur pyrométrique (54) est dirigé diagonalement vers le côté inférieur du côté inférieur du support d'échantillon (16).

5. Dispositif selon l'une quelconque des revendications 1 à 4, caractérisé par le fait que

(a) le bloc d'alimentation électrique comporte un premier transformateur (26) dont l'enroulement secondaire (30) est relié aux électrodes annulaires (12, 14) de sorte qu'un courant de chauffage peut être engendré à travers le tube de graphite (10), grâce â ce premier transformateur (28),

(b) le bloc d'alimentation comporte un deuxième transformateur (28) dont l'enroulement secondaire (44) est relié aux barres conductrices (116, 118) de sorte qu'un courant de chauffage peut être engendré à travers le support d'échantillon (16), grâce à ce deuxième transformateur (28), et

(c) les enroulement primaires (22, 24) des deux transformateurs (26, 28) sont montés en parallèl.

6. Dispositif selon la revendication 5, caractérisé par le fait qu'un commutateur (46) est disposé en série avec l'enroulement primaire (24) du deuxième transformateur (28).

Fig. 1

0 095 549

Fig. 2

Fig. 3

Fig. 5

Fig. 4

0 095 549

Fig. 6

0 095 549

GRAPHITROHR
TEMPERATUR

PROBENTRÄGER
TEMPERATUR

INNEN

PROBENTRÄGER
POSITION

DOSIEREN

AUSSEN

TROCKNEN   ZERS.   ATOMIS.   KÜHLEN

AUSHEIZEN

Fig. 7

17